# EUROPEAN PATENT SPECIFICATION

(11) **EP 0 593 785 B1**
(45) Date of publication and mention of the grant of the patent: **30.12.1998**
(21) Application number: 93910340.4
(22) Date of filing: 14.05.1993
(51) Int. Cl.: H01M 10/40, H01M 4/58

(54) **METHOD OF MANUFACTURE OF A SECONDARY CELL**
HERSTELLUNGSVERFAHREN EINER SEKUNDÄRZELLE
PROCEDE DE FABRICATION D'UN ACCUMULATEUR SECONDAIRE

(30) Priority: 15.05.1992 JP 148518/92; 24.12.1992 JP 358370/92
(43) Date of publication of application: 27.04.1994
(73) Proprietor: YUASA CORPORATION, Takatsuki-shi, Osaka 569 (JP)
(72) Inventor: KURIYAMA, Kazuya, Takatsuki-shi, Osaka 569 (JP); YOSHIHISA, Youetsu, Takatsuki-shi, Osaka 569 (JP); OKANISHI, Hitoshi, Takatsuki-shi, Osaka 569 (JP)
(74) Representative: Stoner, Gerard Patrick
(86) International application number: JP9300636
(87) International publication number: WO9323889

(56) References cited:
- EP-A- 0 165 589
- EP-A- 0 249 331
- EP-A- 0 517 069
- EP-A- 0 517 070
- EP-A- 0 541 889
- EP-A- 0 561 372
- EP-A- 0 563 988
- JP-A- 2 082 466
- JP-A-62 122 066
- JP-A-63 121 259
- JP-A-64 001 220
- JP-B-27 003 411
- PATENT ABSTRACTS OF JAPAN vol. 16, no. 499 (E-1280) 15 October 1992 & JP-A-04 184 862 (YUASA BATTERY CO LTD) 1 July 1992
- PATENT ABSTRACTS OF JAPAN vol. 11, no. 376 (E-563) 8 December 1987 & JP-A-62 145 662 (SANYO ELECTRIC CO., LTD.) 29 June 1987
- PATENT ABSTRACTS OF JAPAN vol. 12, no. 343 (M-741) 14 September 1988 & JP-A-63 104 752 (SUMITOMO METAL IND LTD) 10 May 1988

## Description

This invention relates to the manufacture of secondary batteries and especially to secondary batteries equipped with a negative electrode comprising carbon.

### Background

With the recent tendency to reduce electronic equipment size, the demand for batteries having a large energy density has been increasing. In order to fulfill this request, various new secondary batteries are proposed. Among them is a non-aqueous electrolyte battery using lithium and studies for practical use of this battery are carried on.

However, when practically using a non-aqueous electrolyte battery the following disadvantages caused by use of metallic lithium for the negative electrode have been noted. Namely, (1) a short cycle life and (2) an inferior quick charging ability. These problems are caused by the metallic lithium itself, and regarded as resulting from a form change of lithium negative electrode accompanied by repeated charging and discharging, formation of dendrite and passivation of lithium.

As a means to solve the above problems, a method is proposed wherein the lithium is used not alone but doped in carbon material. This uses the phenomenon that an inter-carbon-layer compound of lithium can be formed easily electrochemically. When a negative electrode comprising carbon material is used and charged in non-aqueous electrolyte, for example, lithium in the electrolyte is doped electrochemically between the carbon layers of the negative electrode, while the lithium is dedoped from between the carbon layers when discharging.

The quantity of electricity per unit weight of carbon material is determined by the doping quantity of lithium. Therefore, in order to increase the charge/discharge capacity of battery it is desired to increase the doping of lithium to the carbon material as far as possible.

Carbon material obtained by carbonizing an organic material is disclosed in JP-A-62/268058 as a carbon material used for the negative electrode of a battery of this kind. However, carbon materials so far known have practically offered a quantity of electricity only half as large as a theoretical value because of insufficient doping with lithium.

Further, a method is proposed wherein a carbon material having a pseudo-graphite structure prepared by carbonizing coke, hydrocarbon or high-molecular material and including a lattice spacing by X-ray diffraction (d002) of larger than 0.34 nm (3.40 Å), and both a size of crystallite in a-axis direction (La) and a size of crystallite in c-axis direction (Lc) of smaller than 20 nm (200Å) is used for a negative electrode so that the negative electrode is formed by absorbing and releasing lithium to and from it. However, when such a pseudo-graphite material having a somewhat random layer structure is used for the negative electrode there are problems, namely (1) a large decrease in capacity during preservation because of reaction of lithium with iron component, calcium component, aluminium component, magnesium component, and titanium components, and (2) an absorbing/ releasing quantity of lithium as small as 100 to 150 mAh/g.

As described above, the present situation is that a hoped - for performance of a negative electrode using carbon material is not accomplished yet in practice.

JP-A- 62/90863 and JP-A-58/209864 disclose non-aqueous electrolyte secondary batteries equipped with negative electrodes using the carbon material. The former describes a negative electrode formed by doping alkali metal such as lithium to coke, and the latter describes a negative electrode formed by doping alkali metal such as lithium to polyacene-forming pyrolytic polymer. Such secondary batteries use the doping phenomenon of alkali metal ion and might have excellent charge/discharge cycle performance because the formation of dendrite, such as in case of the lithium negative electrode, does not occur even when charging and discharging are repeated.

However, since the alkali metal (doped lithium) is consumed at the initial stage of charge/discharge cycle in such secondary batteries, lithium in the positive electrode is made excessive so that the consumed lithium can be supplemented. The volume of the positive electrode therefore increased, with a decrease in energy density per unit volume of battery. Further, there arose a problem that, as compared with a battery using metallic lithium for the negative electrode, self-discharge during non-use was large leading to a decrease in storage capacity.

An object of this invention is to provide a method of making a secondary battery excellent in self-charge characteristics.

According to the invention we provide a method of making a secondary battery having a negative electrode comprising carbon material to absorb and release lithium in operation,
characterised in that
preparation of carbon material for the negative electrode includes treating an initial carbon material, containing more than 1 wt% of at least one of Fe, Ca, Al, Mg and Ti as impurity, to reduce the level of impurity such that none of said impurities is present at above 1 wt%.

Fe₂O₃, CaO, Al₂O₃, MgO and TiO₂ may be components corresponding to the mentioned impurities.

Since iron component, calcium component, aluminium component, magnesium component and titanium component forming impurities will react with absorbed and released lithium, self-discharge of the battery takes place during preservation when carbon material including these impurities is used for the negative electrode.
Concentrations of these impurities are kept low in the invention, so self-discharge is restricted and the preservation property of the battery is better. In particular, the reduction of self-discharge is notable when the densities of these impurities are controlled to 1wt% or smaller.

It is desirable to use a carbon material having a lattice spacing by X-ray diffraction (dOO2) of 0.34 nm (3.40 Å) or less, and crystallite sizes in the a-axis direction (La) and c-axis direction (Lc) of at least 20 nm (200 Å). When (d002) is larger than 0.34 nm (3.40 Å) and (La) and (Lc) are smaller than 20 nm (200 Å), a lithium absorbing/releasing quantity becomes as little as 100 to 150 mAh/g so that energy density can not be increased. However, when the (d002) is 0.34 nm (3.40 Å) or less and both (La) and Lc) are 20 nm (200 Å) or larger, the lithium absorbing/releasing quantity becomes 200 mAh/g or larger so that energy density can be increased. As examples of such carbon material, graphite, fibres using a pitch such as coal or petroleum for raw material and thermally-graphitised mesocarbon microbeads may be mentioned.

### Brief Description of the Drawings

Fig. 1 is a schematic cross-sectional view showing a secondary battery construction for Embodiments 1 to 3 and Comparison Examples 1 to 18.

Figs. 2 to 6 are diagrams showing a change in self-discharge rate in relation to concentration of an impurity, for respective secondary batteries of Embodiments 1 to 3.

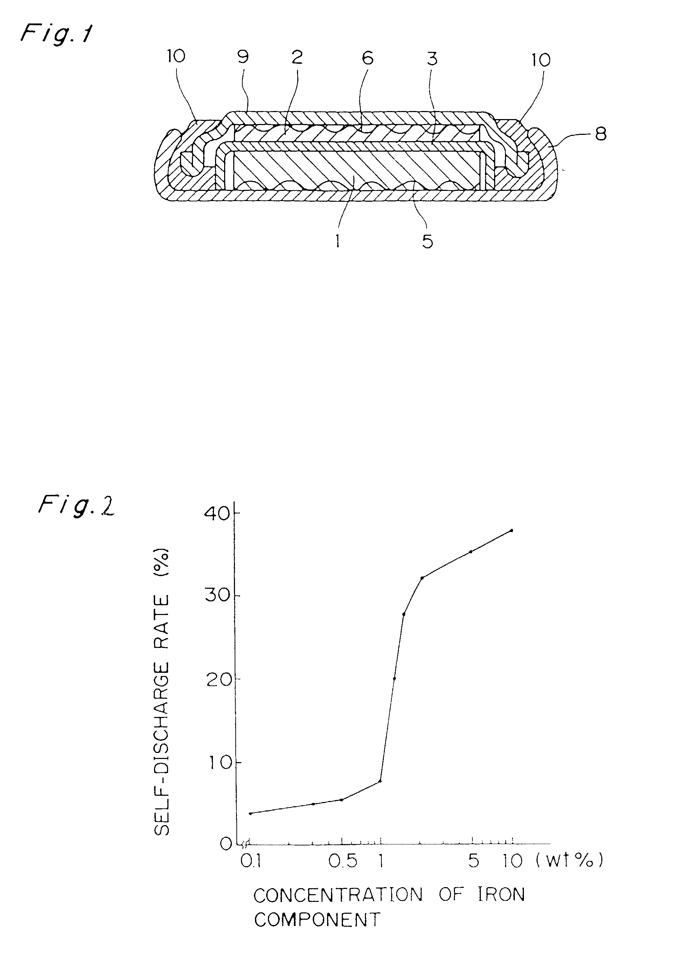

Fig. 1 is a schematic cross-sectional view showing a secondary battery construction for Embodiments 1 to 3 and Comparison Examples 1 to 18. Figs. 2 to 6 are diagrams showing a change in self-discharge rate in relation to concentration of an impurity, for respective secondary batteries of Embodiments 1 to 3.

### Embodiment 1

Fig. 1 is a schematic diagram showing a lithium secondary battery of this embodiment. In this figure, 1 is a positive electrode, 2 is a negative electrode, 3 is a separator, 4 is an electrolyte, 5 is a positive current collector, 6 is a negative current collector, 8 is a positive outer package, 9 is a negative outer package and 10 is an insulation packing. The positive electrode 1 is prepared by mixing LiCoO₂ forming the active material, carbon black forming the conductive material, and fluorocarbon resin forming the binder; and press bonded to the positive current collector 5 comprising aluminium net. The negative electrode 2 is prepared by mixing powder of carbon material with polyvinylidene fluoride forming the binder; and press bonded to the negative current collector 6 comprising the nickel net. The separator 3 is made of a micro-porous film of polypropylene. The electrolyte is prepared by dissolving LiPF₆ into a mixed solvent of ethylene carbonate with diethyl carbonate.

A carbon material used for the negative electrode 2 was obtained by grinding natural graphite to an average grain size of 10 µm and then subjecting it to acid treatment. Iron component, calcium component, aluminum component, magnesium component and titanium component forming impurities in the carbon material were 0.5, 0.3, 0.3, 0.2 and 0.2 wt% respectively. This carbon material was analyzed by X-ray diffraction, and the following results were obtained. Lattice spacing (d002) was 0.335 nm (3.35 Å), a size of crystallite in a-axis direction (La) and a size of crystallite in c-axis direction (Lc) were both 100 nm (1000 Å) or larger.

The battery of this embodiment is designated as battery C1.

### Comparative Examples 1 to 6

Batteries Z1 to Z6 of comparison examples 1 to 6 were made up in the same way as that of Embodiment 1 except that the carbon material was different in the negative electrode 2.

That is, natural graphite was ground to an average grain size of 10 µm and used unmodified as carbon material for the negative electrodes 2 of respective batteries Z1 to Z6, without subjecting to an acid treatment as described in Embodiment 1. These carbon materials were analyzed by X-ray diffraction, and the following results were obtained. Lattice spacing (d002) was 0.335 nm (3.35 Å), a size of crystallite in a-axis direction (La) and a size of crystallite in c-axis direction (Lc) were both 100 nm (1000 Å) or larger. Iron component, calcium component, aluminum component, magnesium component and titanium component forming impurities in the carbon materials are different for the respective batteries Z1 to Z6 as listed in Table 1. Namely, only one component among five components forming the impurities is included by 1 wt% or more for the batteries Z1 to Z5, and all of the five components are included by 1 wt% or more for the battery Z6.

**Table 1**

| Component (wt%) | Battery | | | | | |
|---|---|---|---|---|---|---|
| | Z1 | Z2 | Z3 | Z4 | Z5 | Z6 |
| Fe | 2.0 | 0.5 | 0.5 | 0.5 | 0.5 | 2.0 |
| Ca | 0.3 | 2.0 | 0.3 | 0.3 | 0.3 | 2.0 |
| Al | 0.3 | 0.3 | 2.0 | 0.3 | 0.3 | 2.0 |
| Mg | 0.2 | 0.2 | 0.2 | 2.0 | 0.2 | 2.0 |
| Ti | 0.2 | 0.2 | 0.2 | 0.2 | 2.0 | 2.0 |

Initial capacities of the battery C1 of Embodiment 1 and the batteries Z1 to Z6 of comparison examples 1 to 6 thus prepared were measured and compared. Test conditions were as follows. Charging was done by constant-current constant-voltage charging, a current density of constant-current was 1.0 mA/cm², an end voltage was 4.2V, a constant-voltage charging voltage was 4.2V, and a charging time was five hours; and discharging was done by constant-current discharging, a current density was 1.0 mA/cm², and an end voltage was 3.0V. Initial capacities of the battery C1 and batteries Z1 to Z6 were 18mAh respectively.

Preservation characteristics of the battery C1 and the batteries Z1 to Z6 were measured and compared. Test conditions were as follows. Charging and discharging were repeated ten times under test conditions same with those for measuring the above initial capacities, charging was done under the same conditions, the batteries were preserved at 60°C, and the discharge capacities of batteries were measured. As the results, capacity retention factors after elapse of 30 days were 95% for the battery C1; but 65%, 63%, 61%, 63%, 60% and 50% for the batteries Z1, Z2, Z3, Z4, Z5 and Z6 respectively. As described above, the battery C1 of Embodiment 1 which is controlled to 1 wt% or smaller in its iron component, calcium component, aluminum component, magnesium component and titanium component forming impurities, is excellent in preservation characteristics.

### Investigation of content of impurities

Relations between concentrations of iron component, calcium component, aluminum component, magnesium component and titanium component forming impurities in the carbon material for use in the negative electrode 2 and self-discharge rates of batteries were examined.

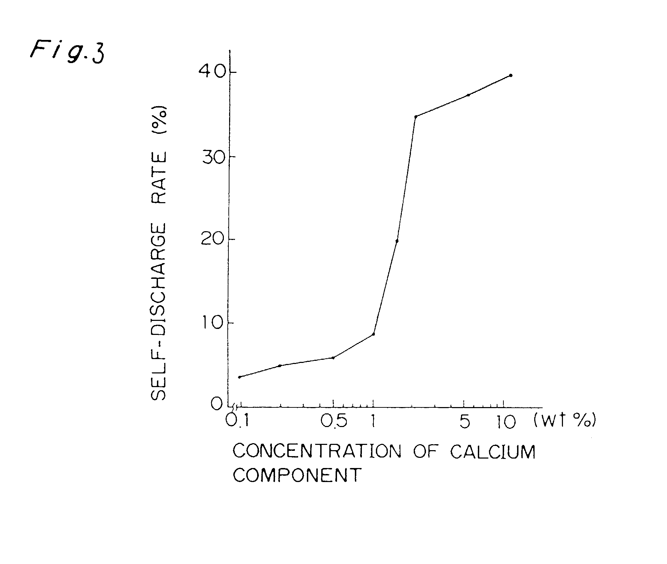

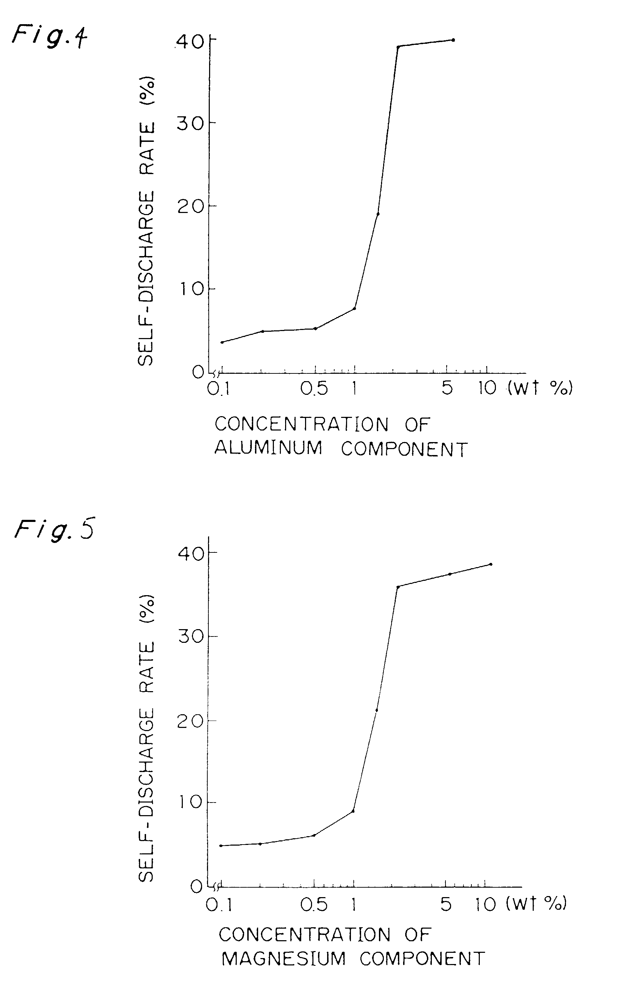

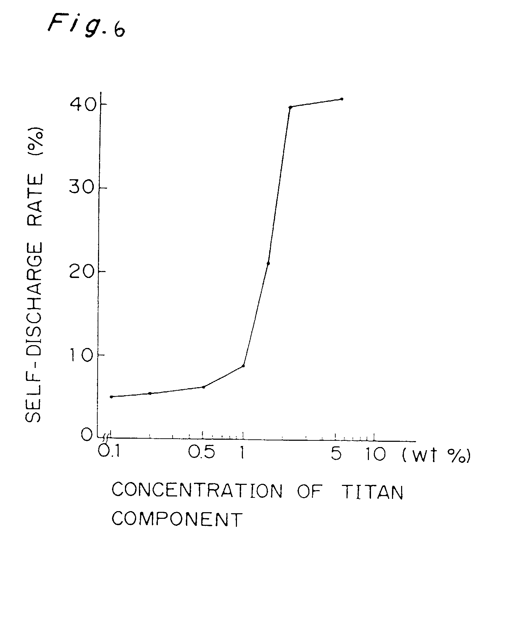

Fig. 2 shows a relation between concentration of iron component and self-discharge rate of battery in a case where the concentrations of calcium component, aluminium component, magnesium component and titanium component in the carbon material are fixed at 0.2, 0.2, 0.1 and 0.1 wt% respectively. Fig 3 shows a relation between concentration of calcium component and self-discharge rate of battery in a case where the concentrations of iron component, aluminium component, magnesium component and titanium component in the carbon material are fixed at 0.3, 0.2, 0.1 and 0.1 wt% respectively. Fig. 4 shows a relation between concentration of aluminium component and self-discharge rate of battery in a case where the concentrations of iron component, calcium component, magnesium component and titanium component in the carbon material are fixed at 0.3, 0.2, 0.1 and 0.1 wt% respectively. Fig. 5 shows a relation between concentration of magnesium component and self-discharge rate of battery in a case where the concentrations of iron component, calcium component, aluminium component, and titanium component in the carbon material are fixed to 0.3, 0.2, 0.2 and 0.1 wt% respectively. Fig. 6 shows a relation between concentration of titanium component and self-discharge rate of battery in a case where the concentrations of iron component, calcium component, aluminium component, and magnesium component in the carbon material are fixed at 0.3, 0.2, 0.2 and 0.1 wt% respectively. As seen from these figures, the self-discharge rate becomes much larger when a concentration of one impurity exceeds 1 wt%.
Therefore, it is desirable for the preservation characteristic of battery to control any concentration of iron component, calcium component, aluminium component, magnesium component, and titanium component forming impurities to 1 wt% or smaller.

### Embodiment 2

A battery C2 of this embodiment was made up in the same way as that of Embodiment except that the carbon material was different in the negative electrode 2.

That is, the carbon material used for the negative electrode 2 was one in which anisotropic coal pitch was burnt at 2,500°C under an atmosphere of argon, ground to an average grain size of 10 µm, and subjected to the acid treatment. Iron component, calcium component, aluminium component, magnesium component and titanium component forming impurities in the carbon material were 0.3, 0.2, 0.2 0.1 and 0.1 wt% respectively. These carbon materials were analysed by X-ray diffraction and the following results were obtained. Lattice spacing (d002) was 0.338 nm (3.38 Å), a size of crystallite in a-axis direction (La) was 25 nm (250 Å) and a size of crystallite in c-axis direction (Lc) was 20 nm (200 Å).

### Comparison Examples 7 to 12

Batteries Z7 to Z12 of comparison examples 7 to 12 were made up in the same way as that of Embodiment 2 except that carbon materials were different in the negative electrode 2.

That is, the carbon material used for the negative electrode 2 of respective batteries Z7 to Z12 was one to obtain which anisotropic coal pitch was burnt at 2,500°C under an atmosphere of argon, ground to an average grain size of 10 µm, and used unmodified without being subjected to the acid treatment as in the Embodiment 2. These carbon materials were analysed by X-ray diffraction, and the following results were obtained. Lattice spacing (d002) was 0.338 nm (3.38 Å), a size of crystallite in a-axis direction (La) was 25 nm (250 Å) and a size of crystallite in c-axis direction (Lc) was 20 nm (200 Å) or larger. Iron component, calcium component, aluminium component, magnesium component and titanium component forming impurities in the carbon material are different for respective batteries Z7 to Z12 as listed in Table 2. Namely, only one component among five components forming the impurities is included at 1 wt% or more for the batteries Z7 to Z11, while all five components are included at 1 wt% or more for the battery Z12.

**Table 2**

| Component (wt%) | Battery | | | | | |
|---|---|---|---|---|---|---|
| | Z7 | Z8 | Z9 | Z10 | Z11 | Z12 |
| Fe | 2.0 | 0.3 | 0.3 | 0.3 | 0.3 | 2.0 |
| Ca | 0.2 | 2.0 | 0.2 | 0.2 | 0.2 | 2.0 |
| Al | 0.2 | 0.2 | 2.0 | 0.2 | 0.2 | 2.0 |
| Mg | 0.1 | 0.1 | 0.1 | 2.0 | 0.1 | 2.0 |
| Ti | 0.1 | 0.1 | 0.1 | 0.1 | 2.0 | 2.0 |

Initial capacities of the battery C2 of embodiment 16 and the batteries Z7 to Z12 of comparison examples 14 through 19 thus prepared were measured and compared. Test conditions were the same as for the battery C1 and the batteries Z1 to Z6. The initial capacities of the battery C2 and the batteries Z7 to Z12 were 16mAh respectively.

Preservation characteristics of the battery C2 and the batteries Z7 to Z12 were measured and compared. Test conditions were the same as for the battery C1 and the batteries Z1 to Z6. Capacity retention factors after elapse of 30 days were 95% for battery C2 but 68%, 65%, 61%, 64%, 60% and 51% for the batteries Z7, Z8, Z9, Z10, Z11 and Z12 respectively. As described above, the battery C2 of Embodiment 2 whose electrode carbon is controlled to 1 wt% or smaller in any of iron component, calcium component, aluminum component, magnesium component and titanium component forming impurities is excellent in preservation characteristics.

### Embodiment 3

A battery C3 of this embodiment was made up in the same way as that of Embodiment 1 except that a carbon material was different in the negative electrode 2.

That is, the carbon material used for the negative electrode 2 was one to obtain which anisotropic coal pitch was burnt at 1,400°C under an atmosphere of argon, ground to an average grain size of 10 µm, and subjected to the acid treatment. Iron component, calcium component, aluminium component, magnesium component and titanium component forming impurities in the carbon material were 0.3, 0.2, 0.2 0.1 and 0.1 wt% respectively. These carbon materials were analysed by X-ray diffraction, and the following results were obtained. Lattice spacing (d002) was 0.345 nm (3.45 Å), a size of crystallite in a-axis direction (La) was 3.4 nm (34 Å) and a size of crystallite in c-axis direction (Lc) was 2 nm (20 Å).

### Comparison example 13 to 18

Batteries Z13 to Z18 of comparison examples 13 to 18 were made up in the same way as that of Embodiment 1 except that carbon materials were different in the negative electrode 2.

That is, the carbon materials used for the negative electrode 2 for respective batteries Z13 to Z18 were ones to obtain which anisotropic coal pitch was burnt at 1,400°C under an atmosphere of argon, ground to an average grain size of 10 µm, and used unmodified without being subjected to acid treatment as in Embodiment 2. These carbon materials were analysed by X-ray diffraction, and the following results were obtained. Lattice spacing (d002) was 0.345 nm (3.45 Å), a size of crystallite in a-axis direction (La) was 3.4 nm (34 Å) and a size of crystallite in c-axis direction (Lc) was 2 nm (20 Å). Iron component, calcium component, aluminium component, magnesium component and titanium component forming the impurities in the carbon material are different for the respective batteries Z13 to Z18 as listed in Table 3. Namely, only one component among five components forming the impurities is included at 1 wt% or more for the batteries Z13 to Z17, while all five components are included at 1 wt% or more in the material for battery Z18.

**Table 3**

| Component (wt%) | Battery | | | | | |
|---|---|---|---|---|---|---|
| | Z13 | Z14 | Z15 | Z16 | Z17 | Z18 |
| Fe | 2.0 | 0.3 | 0.3 | 0.3 | 0.3 | 2.0 |
| Ca | 0.2 | 2.0 | 0.2 | 0.2 | 0.2 | 2.0 |
| Al | 0.2 | 0.2 | 2.0 | 0.2 | 0.2 | 2.0 |
| Mg | 0.1 | 0.1 | 0.1 | 2.0 | 0.1 | 2.0 |
| Ti | 0.1 | 0.1 | 0.1 | 0.1 | 2.0 | 2.0 |

Initial capacities of the battery C3 of Embodiment 3 and the batteries Z13 to Z18 of comparison examples 13 to 18 thus prepared were measured and compared with the battery C2 of Embodiment 2. Test conditions were the same as for the batteries Z1 to Z6. The initial capacity was 16mAh for the battery C2, but 10mAh for the battery C3 and the batteries Z13 to Z18. It can be understood that the battery C2 of embodiment 2 is excellent in capacity.

Preservation characteristics of the batteries Z13 to Z18 were measured and compared with those of the battery C2 of Embodiment 2. Test conditions were same as for batteries Z1 to Z6. Capacity retention factors after elapse of 30 days were 95% for the battery C2 but 68%, 65%, 61%, 64%, 60% and 51% for the batteries Z13, Z14, Z15, Z16, Z17 and Z18 respectively. As mentioned above, the battery C2 of Embodiment 2 whose electrode carbon is controlled to 1 wt% or less in the iron component, calcium component, aluminium component, magnesium component and titanium component forming impurities is excellent in preservation characteristic.

## Claims

1. A method of making a secondary battery having a negative electrode comprising carbon material to absorb and release lithium in operation,
characterised in that
preparation of carbon material for the negative electrode includes treating an initial carbon material, containing more than 1 wt% of at least one of Fe, Ca, Al, Mg and Ti as impurity, to reduce the level of impurity such that none of said impurities is present at above 1 wt%.

2. A method according to claim 1 in which the impurity-reducing treatment is an acid treatment.

3. A method according to claim 1 or claim 2 in which the carbon material for the negative electrode has a lattice spacing (d002) by X-ray diffraction of 0.34nm or less, and crystallite sizes in the a-axis and c-axis directions (La, Lc) of at least 20nm.

4. A method according to claim 3 in which the initial carbon material is selected from graphite, coal pitch, petroleum pitch and thermally-graphitised mesocarbon microbeads.

5. A method according to claim 3 in which the initial carbon material is formed by burning or thermally decomposing an organic compound at a temperature of at least 2200°C.

## Patentansprüche

1. Verfahren zur Herstellung einer Sekundärbatterie mit einer negativen Elektrode, die Kohlenstoffmaterial umfaßt, um im Betrieb Lithium zu absorbieren und wieder freizusetzen, dadurch gekennzeichnet, daß die Herstellung des Kohlenstoffmaterials für die negative Elektrode das Behandeln eines Kohlenstoff-Ausgangsmaterials beinhaltet, das mehr als 1 Gew.-% wenigstens eines der Metalle Fe, Ca, Al, Mg und Ti als Verunreinigung enthält, so daß der Anteil der Verunreinigungen so weit reduziert wird, daß keine dieser Verunreinigungen in einer Menge von über 1 Gew.-% vorhanden ist.

2. Verfahren gemäß Anspruch 1, bei dem die Behandlung zum Reduzieren der Verunreinigungen eine Säurebehandlung ist.

3. Verfahren gemäß Anspruch 1 oder 2, bei dem das Kohlenstoffmaterial für die negative Elektrode einen durch Röntgenbeugung bestimmten Netzebenenabstand (d₀₀₂) von 0,34 nm oder weniger hat und die Größe der Kristallite in Richtung der a-Achse und c-Achse (Lₐ, L_{c}) wenigstens 20 nm beträgt.

4. Verfahren gemäß Anspruch 3, bei dem das Kohlenstoff-Ausgangsmaterial aus Graphit, Kohlenpech, Erdölpech und thermisch graphitisierten meso-Kohlenstoff-Mikrokugeln ausgewählt ist.

5. Verfahren gemäß Anspruch 3, bei dem das Kohlenstoff-Ausgangsmaterial durch Verbrennen oder thermisches Zersetzen einer organischen Verbindung bei einer Temperatur von wenigstens 2200 °C gebildet ist.

## Revendications

1. Procédé de fabrication d'un accumulateur ayant une électrode négative comprenant du carbone pour absorber et libérer du lithium au cours du fonctionnement,
caractérisé en ce que
la préparation du carbone pour l'électrode négative comprend un traitement d'un carbone initial, contenant plus de 1 % en poids d'au moins l'un de Fe, Ca, Al, Mg et Ti comme impureté, de façon à réduire le taux d'impureté afin qu'aucune de ces impuretés ne soit présente à plus de 1 % en poids.

2. Procédé selon la revendication 1, dans lequel le traitement de réduction du taux d'impureté est un traitement acide.

3. Procédé selon la revendication 1 ou la revendication 2, dans lequel le carbone pour l'électrode négative a une distance entre plans réticulaires (d002) par diffraction de rayons X de 0,34 nm ou moins et des tailles de cristallites dans les directions de l'axe a et de l'axe c (La, Lc) d'au moins 20 nm.

4. Procédé selon la revendication 3, dans lequel le carbone initial est choisi parmi le graphite, le brai de houille, le brai de pétrole et les microbilles de mésocarbone graphitisées thermiquement.

5. Procédé selon la revendication 3, dans lequel le carbone initial est formé par combustion ou décomposition thermique d'un composé organique à une température d'au moins 2200°C.
